# EUROPÄISCHE PATENTANMELDUNG

(11) **EP 1 077 385 A1**
(43) Veröffentlichungstag der Anmeldung: **21.02.2001**
(21) Anmeldenummer: 00440223.6
(22) Anmeldetag: 31.07.2000
(51) Int. Cl.: G02B 6/44

(54) **Verfahren zur Herstellung eines optischen Kabels**

(30) Priorität: 19.08.1999 DE 19939376
(71) Anmelder: ALCATEL, 75008 Paris (FR)
(72) Erfinder: Glässner, Jürgen, 41061 Mönchengladbach (DE); Lausch, Peter, 47803 Krefeld (DE); Nothofer, Klaus, 40699 Erkrath (DE); Schleypen, Wieland, 41369 Jüchen (DE)
(74) Vertreter: Rausch, Gabriele, Dr.

(57) **Zusammenfassung**

Bei einem Verfahren zur Herstellung eines optischen Kabels, bei welchem zunächst mehrere Lichtwellenleiter bzw. Hohl-/oder Bündeladern mit wechselnder Schlagrichtung miteinander bzw. um ein Zentralelement verseilt werden, wird das dadurch hergestellte verseilte Element durch zumindest ein wendelartig auf das verseilte Element aufgebrachtes Band fixiert. Sodann wird ein Kunststoffmantel um das fixierte Gebilde extrudiert und der Kunststoffmantel mit einer Prägung, Bedruckung etc. versehen. In bestimmten Abständen werden vor der Extrusion des Mantels metallische Elemente auf oder in der Kabelseele angeordnet, deren längsaxialer Abstand zueinander gleich dem Abstand der Umkehrstellen der Verseilung ist. Nach der Extrusion des Mantels werden die metallischen Elemente detektiert, und es wird eine Vorrichtung zum Prägen, Bedrucken etc. angesprochen, die eine Prägung, Bedruckung etc. an den Umkehrstellen der Verseilung auf dem Mantel anbringt.

## Beschreibung

Die Erfindung betrifft ein Verfahren zur Herstellung eines optischen Kabels nach dem Oberbegriff des Anspruchs 1.

Aus "Wire and Cable Panorama" Aug./Sept. 1985, S. 46 - 53 ist ein Verfahren zum SZ-Verseilen von Nachrichtenkabeln bekannt. Diese bekannte Technik wird seit geraumer Zeit sowohl für konventionelle Nachrichtenkabel mit Kupferleiter als auch für optische Nachrichtenkabel verwendet. Der Vorteil dieser Verseilmethode besteht im wesentlichen darin, daß das Verseilgut von feststehenden Abläufen abgezogen wird und das verseilte Gut auf nur um ihre eigene Achse drehbare Spulen aufgewickelt oder in rotierende Sammelbehälter eingespult werden. Zur Fixierung des Umkehrpunktes, d. h. die Stelle, an der die Schlagrichtung wechselt, wird um das verseilte Gut zumindest ein Band wendelartig aufgewickelt. Über diese Bandlage wird noch eine Zugentlastungsschicht aus Strängen aus zugfestem dielektrischem Material wir z. B. Glasfasern, Kevlar o. ä. aufgebracht und anschließend ein Kunststoffmantel aufextrudiert.

Der Vorteil der SZ-Verseiltechnik besteht darin, daß die optischen Einheiten z. B. Hohl- oder Bündeladern mit einer Überlänge in dem Kabel vorliegen. Dadurch ist es möglich, nach dem Entfernen des Kunststoffmantels und der Zugentlastungsschicht die Adern aus dem Kabel herauszuziehen, so daß die für einen Spleißvorgang benötigte Faserlänge vorrätig ist.

Aus der US-PS 4 828 352 ist ein optisches Kabel bekannt, in welchem die Seele aus SZ-verseilten optischen Einheiten besteht und die Seele von einem Kunststoffmantel umgeben ist. Bei diesem Kabel sind am Mantel Markierungen an den Stellen vorgesehen, an denen die Kabelseele ihren Umkehrpunkt aufweist. Diese Markierungen zeigen dem Monteur, an welcher Stelle des Kabels Aderüberlängen vorhanden sind, die einen Anschluß von Teilnehmern auch zwischen den Kabelenden ermöglichen.

Aus dem DE-GM 92 03 161 ist ein metallfreies optisches Kabel bekannt mit einem in Längsrichtung des Kabels verlaufenden Element aus einem Kunststoff, dem Ferrit zugegeben ist. Das Element ist magnetisiert und kann somit zur Ortung verwendet werden.

Der Erfindung liegt die Aufgabe zugrunde, ein Verfahren anzugeben, mit dem ein optisches Kabel herstellbar ist, welches exakt an den Umkehrstellen Markierungen am Mantel aufweist und darüber hinaus leicht geortet werden kann, wenn es im Erdreich verlegt ist.

Diese Aufgabe wird durch die im Kennzeichen des Anspruchs 1 erfaßten Merkmale gelöst.

Weitere vorteilhaften Ausgestaltungen der Erfindung sind in den Unteransprüchen erfaßt.

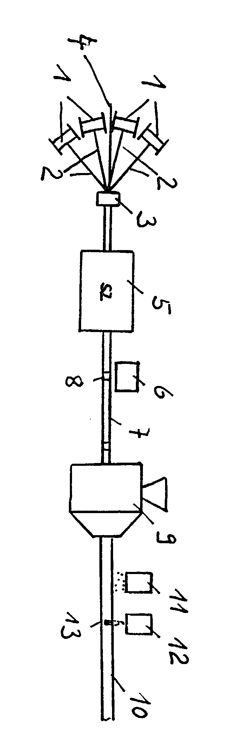

Die Erfindung ist anhand des in der Figur schematisch dargestellten Ausführungsbeispiels näher erläutert.

Mit 1 sind feststehende Vorratsspulen bezeichnet, von denen Lichtwellenleiterelemente, vorzugsweise Bündeladern 2, abgezogen und mittels eines Nippels 3 auf ein Zentralelement 4 aufgelegt werden. Das Zentralelement 4 ist beispielsweise ein Strang aus glasfaserverstärktem Kunststoff.

Von dem Nippel 3 gelangen Zentralelement 4 und Bündeladern 2 in eine Verseileinrichtung 5, in welcher die Bündeladern mit wechselnder Schlagrichtung (SZ-Verseilung) auf das Zentralelement 4 aufgeseilt werden.

Hinter der Verseileinrichtung ist eine Vorrichtung 6 angeordnet, welche auf die aus Zentralelement 4 und Bündeladern 2 bestehende Kabelseele 7 Metallteile 8 aufbringt. Bevorzugt werden schmale Aluminiumstreifen, die mit einer Überdeckung von mindestens 180° aber weniger als 360° auf die Kabelseele 7 aufgeformt werden. Die Vorrichtung 6 wird gesteuert durch die Verseileinheit 5, und zwar in der Weise, daß an jeder Umkehrstelle d. h. dort, wo sich die Schlagrichtung der Bündeladern 2 ändert, ein Aluminiumstreifen angebracht wird. Die mit den Aluminiumstreifen versehene Kabelseele 7 wird in einem Extruder 9 eingeführt, der einen Kunststoffmantel 10 auf die Kabelseele 7 extrudiert.

Das aus Kabelseele 7 und Kunststoffmantel 10 bestehende optische Kabel wird an einer Vorrichtung 11 entlanggeführt, die die Metallteile 8 detektiert. Die Vorrichtung 11 steuert eine Bedruckungseinrichtung 12 an, welche auf den Kunststoffmantel 10 Markierungen 13 aufdruckt oder aufsprüht. Die Steuerung der Bedruckungseinrichtung 12 wird so vorgenommen, daß die Markierungen 13 exakt an den Stellen aufgebracht werden, an den sich die Umkehrstellen befinden.

Die Markierungen 13 sollten so ausgebildet sein, daß sie unter Baustellenbedingungen für den Monteur erkennbar sind, so daß dieser für einen Abzweig den Mantel 10 an der Stelle entfernen, an welcher die Markierung 13 und damit die Umkehrstelle sich befindet.

Der Abstand zwischen den Umkehrstellen und damit zwischen den Markierungen 13 beträgt in etwa 300 - 1500 mm bzw. ein Mehrfaches der Schlaglänge.

Der wesentliche Vorteil der Erfindung ist darin zu sehen, daß in einfacher Weise bei verlegten Kabeln ohne zusätzliche Gerätschaften die Umkehrstelle auffindbar ist. Ein weiterer wesentlicher Vorteil besteht darin, daß das nach der Lehre der Erfindung hergestellte Kabel mit Metallsuchgeräten leicht aufspürbar ist.

Das Verfahren gemäß der Lehre der Erfindung kann sowohl in Einzelarbeitsschritten der Verseilung und der Mantelfertigung als auch bei der Verseilung mit nachgeschalteter Mantelfertigung Anwendung finden. Zudem ist eine nachträgliche Kennzeichnung eines fertig ummantelten Kabels möglich.

## Patentansprüche

1. Verfahren zur Herstellung eines optischen Kabels, bei welchem zunächst mehrere Lichtwellenleiter bzw. Hohl-/oder Bündeladern mit wechselnder Schlagrichtung miteinander bzw. um ein Zentralelement verseilt werden, das dadurch hergestellte verseilte Element durch zumindest ein wendelartig auf das verseilte Element aufgebrachtes Band fixiert wird, sodann ein Kunststoffmantel um das fixierte Gebilde extrudiert wird und der Kunststoffmantel mit einer Prägung, Bedruckung etc. versehen wird, **dadurch gekennzeichnet,** daß in bestimmten Abständen vor der Extrusion des Mantels metallische Elemente auf oder in der Kabelseele angeordnet werden, deren längsaxialer Abstand zueinander gleich dem Abstand der Umkehrstellen der Verseilung ist, daß nach der Extrusion des Mantels die metallischen Elemente detektiert werden und eine Vorrichtung zum Prägen, Bedrucken etc. ansprechen und die Vorrichtung eine Prägung, Bedruckung etc. an den Umkehrstellen der Verseilung auf dem Mantel anbringt.

2. Verfahren nach Anspruch 1 **dadurch gekennzeichnet,** daß die metallischen Elemente an den Umkehrstellen angebracht werden.

3. Verfahren nach Anspruch 1 oder 2, **dadurch gekennzeichnet,** daß ein Band oder eine Folie aus Metall um die Kabelseele herumgelegt wird.

4. Verfahren nach einem der Ansprüche 1 bis 3, **dadurch gekennzeichnet,** daß das Metallband bzw. die Metallfolie mit einer Bedeckung der Kabelseele zwischen mehr als 180 ° und weniger als 360 ° aufgebracht wird.

5. Verfahren nach einem der Ansprüche 1 bis 4, **dadurch gekennzeichnet,** daß eine Aluminiumfolie aufgebracht wird.

6. Verfahren nach einem der Ansprüche 1 bis 5, **dadurch gekennzeichnet,** daß ein mit metallischen Elementen versehener Beilauf in das Kabel eingebracht wird.

7. Verfahren nach einem der Ansprüche 1 bis 6, **dadurch gekennzeichnet,** daß die metallischen Elemente durch Aufsprühen einer die metallhaltigen Elemente enthaltenden Lösung aufgebracht werden.
